# EUROPEAN PATENT SPECIFICATION

(11) **EP 2 890 878 B1**
(45) Date of publication and mention of the grant of the patent: **14.07.2021**
(21) Application number: 13832139.3
(22) Date of filing: 07.08.2013
(51) Int. Cl.: F02C 7/00, F02C 7/28, F01D 11/08

(54) **BLADE OUTER AIR SEAL**
AUSSENLUFTDICHTUNG FÜR EINE TURBINENSCHAUFEL
JOINT D'ÉTANCHÉITÉ À L'AIR EXTERNE D'AUBE

(30) Priority: 29.08.2012 US 201213597745
(43) Date of publication of application: 08.07.2015
(73) Proprietor: Raytheon Technologies Corporation, Farmington, CT 06032 (US)
(72) Inventor: Romanov, Dmitriy A., Wells, Maine 04090 (US); Pelletier, Brian R., Berwick, Maine 03901 (US); Keene, Russell E., Arundel, Maine 04046 (US)
(74) Representative: Dehns
(86) International application number: PCT/US2013/053882
(87) International publication number: WO 2014/035621

(56) References cited:
- EP-A2- 1 162 346
- EP-A2- 1 225 305
- EP-A2- 1 749 975
- EP-A2- 2 093 384
- WO-A1-95/27126
- US-A1- 2004 047 725
- US-A1- 2009 067 994
- US-A1- 2009 214 329
- US-B2- 7 306 424
- US-B2- 7 650 926
- US-B2- 7 650 926
- US-B2- 7 686 068

## Description

### STATEMENT REGARDING FEDERALLY SPONSORED RESEARCH OR DEVELOPMENT

This disclosure was made with Government support under N00019-12-D-0002-4Y01 awarded by The United States Navy. The Government has certain rights in this disclosure.

### BACKGROUND

This disclosure relates generally to a blade outer air seal and, more particularly, to enhancing the performance of a blade outer air seal.

As known, gas turbine engines, and other turbomachines, include multiple sections, such as a fan section, a compressor section, a combustor section, a turbine section, and an exhaust section. Air moves into the engine through the fan section. Airfoil arrays in the compressor section rotate to compress the air, which is then mixed with fuel and combusted in the combustor section. The products of combustion are expanded to rotatably drive airfoil arrays in the turbine section. Rotating the airfoil arrays in the turbine section drives rotation of the fan and compressor sections.

A blade outer air seal arrangement includes multiple blade outer air seals circumferentially disposed about at least some of the airfoil arrays. The tips of the blades within the airfoil arrays seal against the blade outer air seals during operation. Improving and maintaining the sealing relationship between the blades and the blade outer air seals enhances performance of the turbomachine. As known, the blade outer air seal environment is exposed to temperature extremes and other harsh environmental conditions, both of which can affect the integrity of the blade outer air seal and the sealing relationship.

US 7,650,926 B2 discloses a blade outer air seal assembly according to the preamble of claim 1 and method in accordance with the preamble of claim 11, and EP 1225305 A2 and EP 1749975 A2 may be useful in understanding the background of the present disclosure.

### SUMMARY

The present invention provides a blade outer air seal assembly for a gas turbine engine as defined in claim 1.

The present invention also provides a method as defined in claim 11.

Embodiments of the disclosure are set forth in the dependent claims.

These and other features of the disclosed examples can be best understood from the following specification and drawings, the following of which is a brief description.

### BRIEF DESCRIPTION OF THE FIGURES

Figure 1 shows a cross-section of an example turbomachine.
Figure 2 shows a cross-section of an example turbine section of the turbomachine of Figure 1.
Figure 3 shows a perspective view of a blade outer air seal assembly of the turbine section of Figure 2.
Figure 4 shows a top view of the blade outer air seal assembly of the turbine section of Figure 2.
Figure 5 shows another perspective view of the blade outer air seal assembly of the turbine section of Figure 2.
Figure 6 shows top cross-sectional view of the blade outer air seal assembly of the turbine section of Figure 2.
Figure 7 shows method of forming a blade outer air seal assembly.

### DETAILED DESCRIPTION

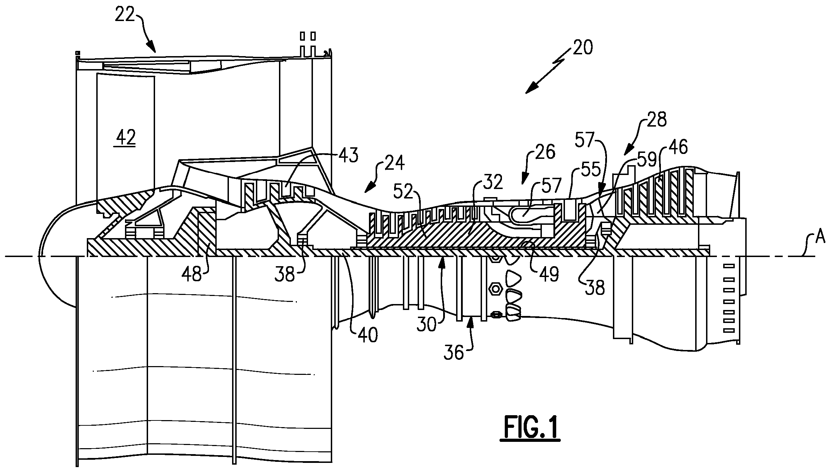

Referring to Figure 1, a gas turbine engine 20 is schematically illustrated. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flowpath while the compressor section 24 drives air along a core flowpath for compression and communication into the combustor section 26 then expansion through the turbine section 28. Although depicted as a turbofan gas turbine engine in the disclosed non-limiting embodiment, it should be understood that the concepts described herein are not limited to use with turbofans as the teachings may be applied to other types of turbine engines including three-spool architectures, non-geared turbine engines, and land-based turbines.

The engine 20 generally includes a first spool 30 and a second spool 32 mounted for rotation about an engine central axis A relative to an engine static structure 36 via several bearing systems 38. It should be understood that various bearing systems 38 at various locations may alternatively or additionally be provided.

The first spool 30 generally includes a first shaft 40 that interconnects a fan 42, a first compressor 43 and a first turbine 46. The first shaft 40 is connected to the fan 42 through a gear assembly of a fan drive gear system 48 to drive the fan 42 at a lower speed than the first spool 30. The second spool 32 includes a second shaft 49 that interconnects a second compressor 52 and second turbine 55. The first spool 30 runs at a relatively lower pressure than the second spool 32. It is to be understood that "low pressure" and "high pressure" or variations thereof as used herein are relative terms indicating that the high pressure is greater than the low pressure. An annular combustor 57 is arranged between the second compressor 52 and the second turbine 55. The first shaft 40 and the second shaft 49 are concentric and rotate via bearing systems 38 about the engine central axis A which is collinear with their longitudinal axes.

The core airflow is compressed by the first compressor 43 then the second compressor 52, mixed and burned with fuel in the annular combustor 57, then expanded over the second turbine 55 and first turbine 46. The first turbine 46 and the second turbine 55 rotationally drive, respectively, the first spool 30 and the second spool 32 in response to the expansion.

The engine 20 is a high-bypass geared aircraft engine that has a bypass ratio that is greater than about six (6), with an example embodiment being greater than ten (10), the gear assembly of the fan drive gear system 48 is an epicyclic gear train, such as a planetary gear system or other gear system, with a gear reduction ratio of greater than about 2.3:1 and the first turbine 46 has a pressure ratio that is greater than about 5. The first turbine 46 pressure ratio is pressure measured prior to inlet of first turbine 46 as related to the pressure at the outlet of the first turbine 46 prior to an exhaust nozzle. The first turbine 46 has a maximum rotor diameter and the fan 42 has a fan diameter such that a ratio of the maximum rotor diameter divided by the fan diameter is less than 0.6. It should be understood, however, that the above parameters are only exemplary.

A significant amount of thrust is provided by the bypass flow B due to the high bypass ratio. The fan section 22 of the engine 20 is designed for a particular flight condition -- typically cruise at about 0.8 Mach and about 10668 meters (35,000 feet). The flight condition of 0.8 Mach and 10668 meters (35,000 feet), with the engine at its best fuel consumption. To make an accurate comparison of fuel consumption between engines, fuel consumption is reduced to a common denominator, which is applicable to all types and sizes of turbojets and turbofans. The term is thrust specific fuel consumption, or TSFC. This is an engine's fuel consumption in pounds per hour divided by the net thrust. The result is the amount of fuel required to produce one pound of thrust. The TSFC unit is pounds per hour per pounds of thrust (lb/hr/lb Fn). When it is obvious that the reference is to a turbojet or turbofan engine, TSFC is often simply called specific fuel consumption, or SFC. "Low fan pressure ratio" is the pressure ratio across the fan blade alone, without a Fan Exit Guide Vane system. The low fan pressure ratio as disclosed herein according to one non-limiting embodiment is less than about 1.45. "Low corrected fan tip speed" is the actual fan tip speed in feet per second divided by an industry standard temperature correction of [(Tram °R) / (518.7 °R)]^{0.5}. The "Low corrected fan tip speed" as disclosed herein according to one non-limiting embodiment is less than about 350.5 meter (1150 feet) per second.

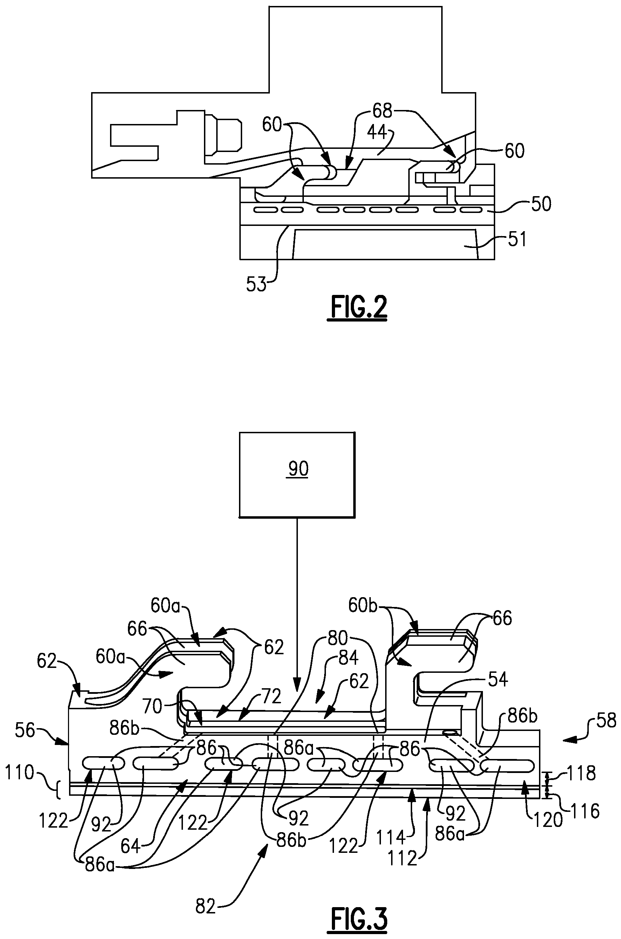

Referring to Figure 2, an example blade outer air seal (BOAS) assembly 50 is attached to an inner engine case structure 44 of the gas turbine engine 10 by a receiving portion 68 of the inner engine case structure 44. In this example, the BOAS assembly 50 is located within the turbine section 28 of the gas turbine engine 20. The BOAS assembly 50 faces turbine blade 51 to define a radial tip clearance 53 between the turbine blade 51 and the BOAS assembly 50. Although only one BOAS assembly 50 is shown, a number of BOAS assembly 50 are arranged circumferentially about engine axis A to form a shroud. Alternatively, the BOAS assemblies 50 may be formed as a unitary BOAS structure, with the same features described herein.

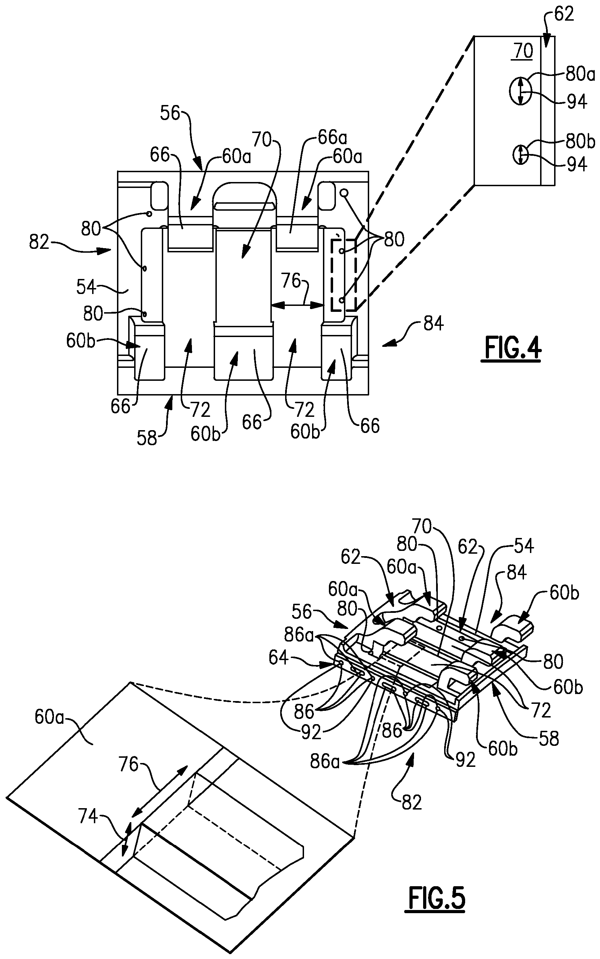

Referring to Figures 3-6, the BOAS assembly 50 includes a main body portion 54 that extends generally axially from a leading edge portion 56 to a trailing edge portion 58 and from a radially outward facing surface 62 to a radially inward facing surface 64. The BOAS assembly 50 also includes at least one leading attachment portion 60a ("attachment portions 60a") disposed at or near the leading edge portion 56 and at least one trailing attachment portion 60b ("attachment portions 60b") disposed at or near the trailing edge portion 58. Each of the attachment portions 60a, 60b define a flange 66 extending in an axially aft direction. Each axially extending flange 66 corresponds to the receiving portion 68 of the inner engine case structure 44 to support and attach the BOAS assembly 50 (Shown in Figure 2). In this example, the attachment portions 60a may be circumferentially offset, circumferentially aligned, or a combination of both, from the attachment portions 60b in response to BOAS assembly 50 parameters.

In this example, the BOAS assembly 50 includes a cavity 70 opening to the radially outward facing surface 62 between the attachment portions 60a and the attachment portions 60b. It is understood that other configurations of cavity 70 are contemplated by this disclosure.

In this example, the main body portion 54 establishes at least one rib 72 circumferentially aligned with corresponding attachment portion 60a and circumferentially offset from attachment portions 60b. The at least one rib 72 is disposed at least partially within the cavity 70 and extends axially from corresponding attachment portion 60a within the cavity 70 to the trailing edge portion 58 adjacent attachment portions 60b. In another example, the at least one rib 72 is circumferentially aligned with corresponding attachment portions 60a and attachment portion 60b and extends axially from attachment portion 60a to corresponding attachment portion 60b. A ratio of the height 74 in the radial direction of the at least one rib 72 to the width 76 in the circumferential direction of the at least one rib 72 is between 1:1 and 1:10.

In this example, a plurality of fluid inlets 80 open to the radially outward facing surface 62 near a first circumferential end 82 and a second circumferential end 84 of the main body portion 54. The fluid inlets 80 may be located in the cavity 70 or alternatively at other positions on the radially outward facing surface 62. The fluid inlets 80 are varied in size based on pre-determined cooling parameters. Fluid inlets 80a with a larger surface area provide a greater amount of cooling airflow than fluid inlets 80b with a smaller surface area, thus providing cooling flow distribution based on thermal load distribution. In this way, portions of the BOAS assembly 50 subject to relatively higher thermal loads compared to other portion of the BOAS assembly 50 receive greater cooling by receiving cooling airflow through relatively larger fluid inlets 80.

In this example, each of the fluid inlets 80 is in fluid communication with a corresponding cooling passage 86 defined in the main body portion 54 radially inwards of fluid inlet 80 and cavity 70. Each cooling passage 86 includes a first portion 86a generally transverse to a second portion 86b. The first portion 86a extends in a generally circumferential direction from the first circumferential end 82 to the second circumferential end 84 of the main body portion 54 to provide cooling. The second portion 86b extends in a generally radial direction to provide fluid communication between inlet 80 and the first portion 86a. In this example, each cooling passage 86 is defined entirely within the main body portion 54.

The BOAS assembly 50 is in fluid communication with an airflow source 90 (shown schematically), such as an upstream compressor 24 or other source, such that fluid inlets 80 receive cooling airflow, such as bleed compressor air. The cooling airflow passes through fluid inlets 80 and is communicated to the first portion 86a of corresponding cooling passage 86 via second portion 86b for cooling the BOAS assembly 50. The cooling airflow passes through the cooling passage 86 from the fluid inlet 80 to a fluid outlet 92 located at the circumferential end 82, 84 of the cooling passage 86 opposite fluid inlet 80. The amount of cooling airflow communicated to each cooling passage 86 is determined by the size of fluid inlet 80. The BOAS assembly 50 also include a pressure gradient which determines the amount of cooling airflow communicated to each cooling passage 86. In this example, the fluid inlets 80 have a cross sectional area 94 between about 0.00181 cm^2 (about 0.00028 in.^2) and about 0.00503 cm^2 (about 0.0078 in.^2). Cooling airflow is communicated through each cooling passage 86 in a single circumferential direction in this example. Plugs (not shown) are inserted to close the cooling passage 86 at the circumferential end 82, 84 corresponding to the fluid inlet 80 of each passage.

In this example, the BOAS assembly 50 is made of a material having sulfer levels at or below 1 part per million (PPM), such as a single crystal nickel alloy, but other examples may include other types of material. The thermal barrier coating 110 is a metallic or ceramic based material in this example.

In this example, the BOAS assembly 50 includes a thermal barrier coating 110 disposed on the radially inward facing surface 64 of the main body portion 54. The thermal barrier coating 110 includes a thermal layer 112 and a bond layer 114. A thickness 116 of the thermal barrier coating 110 is substantially equal to a thickness 118 of an inner wall 120 of the main body portion 54 defined between a floor 122 of the plurality of cooling passages 86 and the radially inward facing surface 64. The term substantially equal conveys that one of ordinary skill in the art would consider the measurements to be the same within recognized tolerances.

The thickness 116 of the thermal barrier coating 110 and the thickness 118 of the inner wall 120 are between 0.0635 cm and 0.0762 cm (0.025 and 0.030 inches). In this example, the thickness 116 of the thermal barrier coating 110 and the thickness 118 of the inner wall 120 is about 0.0686 cm (0.027 inches).

During gas turbine engine 20 operation, the BOAS assembly 50 is subjected to different thermal loads and environmental conditions. Cooling air flow from the airflow source 90 is provided to the various fluid inlets 80, which communicate the cooling airflow to the cooling passages 86 to provide varying levels of cooling to different areas of the BOAS assembly 50 and effectively communicate thermal energy away from the BOAS assembly 50 and the tip of the rotating blade 51. The thermal barrier coating 110 is provided on the radially inner facing surface 64 of the main body portion 54 to provide additional protection from the thermal loads. The at least one rib 72 provides stability to the BOAS assembly 50 to prevent axial deformation due to the reduction in BOAS assembly 50 material due to the use of cooling features and thermal bond coating, as described in this disclosure.

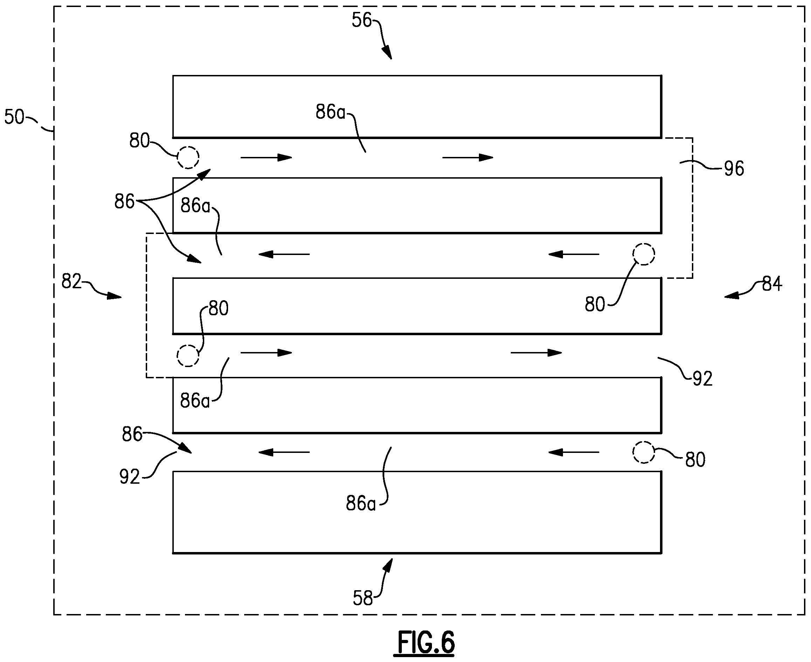

Referring to Figure 6, in another example, adjacent first portions 86a of cooling passages 86 provided in the main body portion 54 are connected at either the first circumferential end 82 or the second circumferential end 84 to form a serpentine passage 96 (shown schematically in phantom in Fig. 6) in fluid communication with a single fluid inlet 80 or multiple fluid inlets 80 via one or more second portions 86b (as shown in Figure 3).

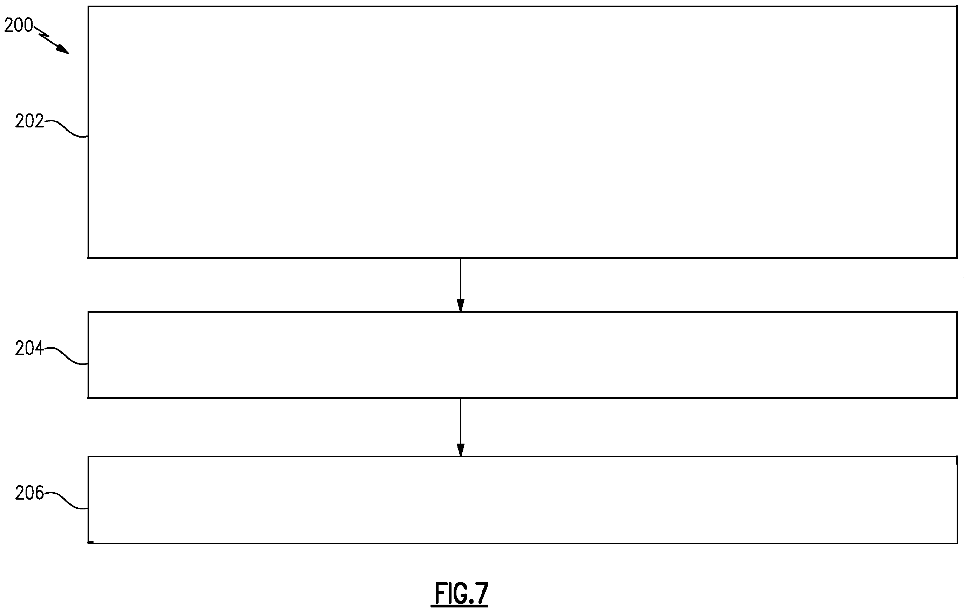

Referring to Figure 7, with continued reference to Figures 2-6, a method of forming a BOAS assembly 200 includes providing a main body portion along an axis A having a radially inward facing surface and a radially outward facing surface that extend axially between a leading edge portion and a trailing edge portion 202. At least one passage is disposed in the main body portion between the radially inward facing surface and the radially outward facing surface 202. The at least one passage has a radial second portion and an axial first portion transverse to the radial second portion. The first portion defines a floor. At least one rib is provided along the axis A. The at least one rib is radially outward of the circumferential first portion. An inner wall defined between the floor and the radially inward facing surface is machined to reduce a thickness of the inner wall 204. A thermal barrier coating is deposited adjacent the radially inward facing surface 206. A thickness of the thermal barrier coating is substantially equal to the reduced thickness of the inner wall 206.

The preceding description is exemplary rather than limiting in nature. Variations and modifications to the disclosed examples may become apparent to those skilled in the art that do not necessarily depart from the essence of this disclosure. Thus, the scope of legal protection given to this disclosure can only be determined by studying the following claims.

## Claims

1. A blade outer air seal assembly (50) for a gas turbine engine (20), comprising:
a main body portion (54) extending axially along an axis, the main body portion having a radially inward facing surface (64) and at least one radially outward facing surface (62);
a passage (86) provided in the main body portion (54) between the at least one radially inward facing surface (64) and the at least one radially outward facing surface (62), the passage (86) having a first portion (86a) extending generally circumferentially, wherein the first portion has a floor (122), wherein at least one airflow inlet (80) is provided by the at least one radially outward facing surface (62), and at least one fluid outlet (92) is disposed at a circumferential end of the main body portion (54) radially outward of the radially inward facing surface (64); and
at least one rib (72) disposed along the axis radially outward of the first portion (86a),
the passage (86) has a second portion (86b) extending generally radially transverse to the
first portion (86a) to provide fluid communication between the airflow inlet (80) and the first portion (86a); **characterised in that**
the blade outer air seal (50) further comprising a thermal barrier coating (110) disposed adjacent the radially inward facing surface, wherein a thickness of the thermal barrier coating is substantially equal to a thickness of an inner wall of the main body portion defined between the floor (122) of the first portion (86a) and the radially inward facing surface.

2. The assembly (50) of claim 1, wherein the at least one rib (72) is at least partially in a cavity (70) that opens in a radially outward facing direction, the at least one rib comprising one of the radially outward facing surfaces (62).

3. The assembly (50) of claim 1 or 2, wherein the at least one airflow inlet (80) includes at least a first airflow inlet (80a) having a cross-section greater than a second airflow inlet (80b).

4. The assembly (50) of any preceding claim, wherein the at least one airflow inlet (80) includes a first airflow inlet opening to a cavity that opens in a radially outward facing direction.

5. The assembly (50) of any preceding claim, including at least one attachment portion (60a, 60b) disposed at both a leading edge (56) of the main body portion and a trailing edge (58) of the main body portion, each of the at least one attachment portions (60a, 60b) having a flange (66) extending axially aft.

6. The assembly (50) of claim 5, wherein the at least one rib (72) is circumferentially aligned with one of the attachment portions (60a) disposed at the leading edge (56).

7. The assembly (50) of any preceding claim, wherein the main body portion (54) comprises a single crystal nickel alloy having a sulfur content that is equal to or below 1 part per million.

8. The assembly of any preceding claim, wherein the passage is entirely radially outward of the thermal barrier coating.

9. The assembly (50) of any preceding claim, wherein the first portion (86a) is radially inward of the second portion (86b).

10. The assembly (50) of any preceding claim, wherein at least one of the radially outward facing surfaces (62) is exposed.

11. A method of forming a blade outer air seal (50) for a gas turbine engine (20) comprising:
providing a main body portion (54) having a radially inward facing surface (64) and a radially outward facing surface (62) that axially extend along an axis, wherein at least one passage (86) is defined in the main body portion (54) between the radially inward facing surface (64) and the radially outward facing surface (62), the at least one passage (86) having a first portion (86a) extending generally circumferentially, wherein the first portion has a floor (122), wherein at least one rib (72) is disposed along the axis on the radially outward facing surface (62), the at least one rib radially outward of the circumferential first portion (86a); and
forming at least one airflow inlet opening to the radially outward facing surface, wherein the at least one passage (86) comprises a second portion (86b) extending generally radially transverse to the first portion (86a), wherein the second portion (86b) is in fluid communication with the at least one airflow inlet (80) and configured to receive cooling air flow, **characterised in that** the method further comprises:
machining an inner wall (120) defined between the floor (122) and the radially inward facing surface (64) to reduce a thickness of the inner wall (120); and
depositing a thermal barrier coating (110) adjacent the radially inward facing surface, wherein the thermal barrier coating is substantially equal to the reduced thickness of the inner wall.

## Patentansprüche

1. Baugruppe (50) einer äußeren Schaufelluftdichtung für ein Gasturbinentriebwerk (20), umfassend:
einen Hauptkörperteil (54), der sich axial entlang einer Achse erstreckt, wobei der Hauptkörperteil eine radial nach innen zeigende Fläche (64) und mindestens eine radial nach außen zeigende Fläche (62) aufweist;
einen Durchgang (86), der in dem Hauptkörperteil (54) zwischen der mindestens einen radial nach innen zeigenden Fläche (64) und der mindestens einen radial nach außen zeigenden Fläche (62) vorgesehen ist, wobei der Durchgang (86) einen ersten Teil (86a) aufweist, der sich im Allgemeinen umlaufend erstreckt, wobei der erste Teil einen Boden (122) aufweist, wobei mindestens ein Luftstromeinlass (80) durch die mindestens eine radial nach außen zeigende Fläche (62) vorgesehen ist, und mindestens ein Fluidauslass (92) an einem Umfangsende des Hauptkörperteils (54) radial außen von der radial nach innen zeigenden Fläche (64) angeordnet ist; und
mindestens eine Rippe (72), die entlang der Achse radial außen von dem ersten Teil (86a) angeordnet ist,
wobei der Durchgang (86) einen zweiten Teil (86b) aufweist, der sich im Allgemeinen quer zu dem ersten Teil (86a) erstreckt, um eine Fluidkommunikation zwischen dem Luftstromeinlass (80) und dem ersten Teil (86a) bereitzustellen; **dadurch gekennzeichnet, dass**
die äußere Schaufelluftdichtung (50) ferner eine Wärmedämmschicht (110) umfasst, die angrenzend an die radial nach innen zeigende Fläche angeordnet ist, wobei eine Dicke der Wärmedämmschicht im Wesentlichen einer Dicke einer Innenwand des Hauptkörperteils entspricht, die zwischen dem Boden (122) des ersten Teils (86a) und der radial nach innen zeigenden Fläche definiert ist.

2. Baugruppe (50) nach Anspruch 1, wobei sich die mindestens eine Rippe (72) zumindest teilweise in einem Hohlraum (70) befindet, der sich in einer radial nach außen zeigenden Richtung öffnet, wobei die mindestens eine Rippe eine der radial nach außen zeigenden Flächen (62) umfasst.

3. Baugruppe (50) nach Anspruch 1 oder 2, wobei der mindestens Luftstromeinlass (80) mindestens einen ersten Luftstromeinlass (80a) einschließt, der einen Querschnitt aufweist, der größer als ein zweiter Luftstromeinlass (80b) ist.

4. Baugruppe (50) nach einem vorhergehenden Anspruch, wobei der mindestens eine Luftstromeinlass (80) eine erste Luftstromeinlassöffnung zu einem Hohlraum einschließt, der sich in einer radial nach außen zeigenden Richtung öffnet.

5. Baugruppe (50) nach einem vorhergehenden Anspruch, einschließend mindestens einen Befestigungsteil (60a, 60b), der sowohl an einer Vorderkante (56) des Hauptkörperteils als auch einer Hinterkante (58) des Hauptkörperteils angeordnet ist, wobei jeder des mindestens einen Befestigungsteils (60a, 60b) einen Flansch (66) aufweist, der sich axial hinten erstreckt.

6. Baugruppe (50) nach Anspruch 5, wobei die mindestens eine Rippe (72) umlaufend mit einem der Befestigungsteile (60a) ausgerichtet ist, die an der Vorderkante (56) angeordnet sind.

7. Baugruppe (50) nach einem vorhergehenden Anspruch, wobei der Hauptkörperteil (54) eine Einkristall-Nickel-Legierung umfasst, die einen Schwefelgehalt aufweist, der kleiner gleich 1 Teil pro Million ist.

8. Baugruppe nach einem vorhergehenden Anspruch, wobei sich der Durchgang vollständig radial außerhalb der Wärmedämmschicht befindet.

9. Baugruppe (50) nach einem vorhergehenden Anspruch, wobei sich der erste Teil (86a) radial innen von dem zweiten Teil (86b) befindet.

10. Baugruppe (50) nach einem vorhergehenden Anspruch, wobei mindestens eine der radial nach außen zeigenden Flächen (62) freiliegt.

11. Verfahren zum Bilden einer äußeren Schaufelluftdichtung (50) für ein Gasturbinentriebwerk (20), umfassend:
Bereitstellen eines Hauptkörperteils (54), der eine radial nach innen zeigende Fläche (64) und eine radial nach außen zeigende Fläche (62) aufweist, die sich axial entlang einer Achse erstrecken, wobei mindestens ein Durchgang (86) in dem Hauptkörperteil (54) zwischen der radial nach innen zeigenden Fläche (64) und der radial nach außen zeigenden Fläche (62) vorgesehen ist, wobei der mindestens eine Durchgang (86) einen ersten Teil (86a) aufweist, der sich im Allgemeinen umlaufend erstreckt, wobei der erste Teil einen Boden (122) aufweist, wobei mindestens eine Rippe (72) entlang der Achse an der radial nach außen zeigenden Fläche (62) vorgesehen ist, wobei sich die mindestens eine Rippe radial außerhalb des umlaufenden ersten Teils (86a) befindet; und
Bilden von mindestens einer Luftstromeinlassöffnung zu der radial nach außen zeigenden Fläche, wobei der mindestens eine Durchgang (86) einen zweiten Teil (86b) umfasst, der sich im Allgemeinen radial quer zu dem ersten Teil (86a) erstreckt, wobei der zweite Teil (86b) mit dem mindestens einen Luftstromeinlass (80) in Fluidkommunikation steht und konfiguriert ist, um einen Kühlluftstrom aufzunehmen, **dadurch gekennzeichnet, dass** das Verfahren ferner Folgendes umfasst:
maschinelles Bearbeiten einer Innenwand (120), die zwischen dem Boden (122) und der radial nach innen zeigenden Fläche (64) definiert ist, um eine Dicke der Innenwand (120) zu verringern; und
Abscheiden einer Wärmedämmschicht (110) angrenzend an die radial nach innen zeigende Fläche, wobei die Wärmedämmschicht im Wesentlichen der verringerten Dicke der Innenwand entspricht.

## Revendications

1. Joint d'étanchéité à l'air externe d'aube (50) pour un moteur à turbine à gaz (20), comprenant :
une partie de corps principal (54) s'étendant axialement le long d'un axe, la partie de corps principal ayant une surface tournée radialement vers l'intérieur (64) et au moins une surface tournée radialement vers l'extérieur (62) ;
un passage (86) prévu dans la partie de corps principal (54) entre l'au moins une surface tournée radialement vers l'intérieur (64) et l'au moins une surface tournée radialement vers l'extérieur (62), le passage (86) ayant une première partie (86a) s'étendant généralement circonférentiellement, dans lequel la première partie a un plancher (122), dans lequel au moins une entrée d'écoulement d'air (80) est fournie par l'au moins une surface tournée radialement vers l'extérieur (62), et
au moins une sortie de fluide (92) est disposée au niveau d'une extrémité circonférentielle de la partie de corps principal (54) radialement vers l'extérieur de la surface tournée radialement vers l'intérieur (64) ; et
au moins une nervure (72) disposée le long de l'axe radialement vers l'extérieur de la première partie (86a),
le passage (86) a une seconde partie (86b) s'étendant généralement radialement transversalement à la première partie (86a) pour fournir une communication fluidique entre l'entrée d'écoulement d'air (80) et la première partie (86a) ;
**caractérisé en ce que**
le joint d'étanchéité à l'air externe d'aube (50) comprend en outre un revêtement de barrière thermique (110) disposé de manière adjacente à la surface tournée radialement vers l'intérieur, dans lequel une épaisseur du revêtement de barrière thermique est sensiblement égale à une épaisseur d'une paroi intérieure de la partie de corps principal définie entre le plancher (122) de la première partie (86a) et la surface tournée radialement vers l'intérieur.

2. Ensemble (50) selon la revendication 1, dans lequel l'au moins une nervure (72) est au moins partiellement dans une cavité (70) qui s'ouvre dans une direction tournée radialement vers l'extérieur, l'au moins une nervure comprenant l'une des surfaces tournées radialement vers l'extérieur (62).

3. Ensemble (50) selon la revendication 1 ou 2, dans lequel l'au moins une entrée d'écoulement d'air (80) comporte au moins une première entrée d'écoulement d'air (80a) ayant une section transversale supérieure à une seconde entrée d'écoulement d'air (80b) .

4. Ensemble (50) selon une quelconque revendication précédente, dans lequel l'au moins une entrée d'écoulement d'air (80) comporte une première ouverture d'entrée d'écoulement d'air vers une cavité qui s'ouvre dans une direction tournée radialement vers l'extérieur.

5. Ensemble (50) selon une quelconque revendication précédente, comportant au moins une partie de fixation (60a, 60b) disposée à la fois au niveau d'un bord d'attaque (56) de la partie de corps principal et au niveau d'un bord de fuite (58) de la partie de corps principal, chacune de l'au moins une partie de fixation (60a, 60b) ayant une bride (66) s'étendant axialement vers l'arrière.

6. Ensemble (50) selon la revendication 5, dans lequel l'au moins une nervure (72) est alignée circonférentiellement avec l'une des parties de fixation (60a) disposées au niveau du bord d'attaque (56).

7. Ensemble (50) selon une quelconque revendication précédente, dans lequel la partie de corps principal (54) comprend un alliage de nickel monocristallin ayant une teneur en soufre qui est égale ou inférieure à 1 partie par million.

8. Ensemble selon une quelconque revendication précédente, dans lequel le passage est entièrement radialement vers l'extérieur du revêtement de barrière thermique.

9. Ensemble (50) selon une quelconque revendication précédente, dans lequel la première partie (86a) est radialement vers l'intérieur de la seconde partie (86b).

10. Ensemble (50) selon une quelconque revendication précédente, dans lequel au moins l'une des surfaces tournées radialement vers l'extérieur (62) est exposée.

11. Procédé de formation d'un joint d'étanchéité à l'air externe d'aube (50) pour un moteur à turbine à gaz (20) comprenant :
la fourniture d'une partie de corps principal (54) ayant une surface tournée radialement vers l'intérieur (64) et une surface tournée radialement vers l'extérieur (62) qui s'étendent axialement le long d'un axe, dans lequel au moins un passage (86) est défini dans la partie de corps principal (54) entre la surface tournée radialement vers l'intérieur (64) et la surface tournée radialement vers l'extérieur (62), l'au moins un passage (86) ayant une première partie (86a) s'étendant généralement circonférentiellement, dans lequel la première partie a un plancher (122), dans lequel au moins une nervure (72) est disposée le long de l'axe sur la surface tournée radialement vers l'extérieur (62), l'au moins une nervure radialement vers l'extérieur de la première partie circonférentielle (86a) ; et
la formation d'au moins une ouverture d'entrée d'écoulement d'air sur la surface tournée radialement vers l'extérieur, dans lequel l'au moins un passage (86) comprend une seconde partie (86b) s'étendant généralement radialement transversalement à la première partie (86a), dans lequel la seconde partie (86b) est en communication fluidique avec l'au moins une entrée d'écoulement d'air (80) et configurée pour recevoir un écoulement d'air de refroidissement, **caractérisé en ce que** le procédé comprend en outre :
l'usinage d'une paroi intérieure (120) définie entre le plancher (122) et la surface tournée radialement vers l'intérieur (64) pour réduire une épaisseur de la paroi intérieure (120) ; et
le dépôt d'un revêtement de barrière thermique (110) adjacent à la surface tournée radialement vers l'intérieur, dans lequel le revêtement de barrière thermique est sensiblement égal à l'épaisseur réduite de la paroi intérieure.
